# EUROPEAN PATENT SPECIFICATION

(11) **EP 2 783 826 B1**
(45) Date of publication and mention of the grant of the patent: **27.05.2020**
(21) Application number: 14156763.6
(22) Date of filing: 26.02.2014
(51) Int. Cl.: B29C 45/67, B29C 45/40

(54) **Injection molding machine**
Spritzgießmaschine
Machine de moulage à injection

(30) Priority: 25.03.2013 JP 2013063056
(43) Date of publication of application: 01.10.2014
(73) Proprietor: SUMITOMO HEAVY INDUSTRIES, LTD., Tokyo 141-6025 (JP)
(72) Inventor: Shishikura, Masaya, Chiba, 263-0001 (JP)
(74) Representative: Hoffmann Eitle

(56) References cited:
- EP-A1- 1 284 179
- JP-A- H07 214 610
- JP-A- H09 267 372
- US-A- 3 677 685
- US-A- 3 940 930
- US-A- 3 941 549
- US-A- 4 545 756

## Description

### BACKGROUND

### 1. Technical Field

The disclosures herein generally relate to an injection molding machine.

### 2. Description of Related Art

US 3,677,685 A1 refers to a mold clamping mechanism of an injection molding machine, wherein the clamping mechanism is composed of a high pressure mold clamping mechanism 1, a high speed mold closing low pressure cylinder 2 and a high pressure switching cylinder 3, which are arranged in a straight line and in a series relation.

US 3,940,930 refers to a hydraulic system for an injection molding machine wherein according to one of the embodiments, a second piston abuts the stationary platen when fluid pressure is provided at the rear face of the first piston from a line.

Further documents are JP H07 214610 A, US 4,545,756 A, and JPH09 267372 A.

EP 1 284 179 A1 refers to a device for providing a closing force for an injection molding machine.

US 3,941,549 A1 refers to a reciprocating screw injection molding machine wherein the screw is actuated by coaxial hydraulic rotar and linear motors.

An injection molding machine may include a hydraulic cylinder for moving a second member relative to a first member (see, for example, Patent Document 1).

### [Related-Art Documents]

### [Patent Documents]

[Patent Document 1] WO 2006/054522

A hydraulic cylinder that is supplied with a high-pressure operating fluid by a hydraulic pump has a greater thrust with a larger cross-sectional area but a lower speed provided the capacity of hydraulic pump remains the same.

It is desirable, in the light of these circumstances, to provide an injection molding machine that can switch its operation states between a state with a great thrust and another state with high speed.

### SUMMARY

According to the present invention, an injection molding machine includes the features of claim 1.According to the present invention, it is possible to provide an injection molding machine that can switch its operation states between a state with a great thrust and another state with high speed.

### BRIEF DESCRIPTION OF DRAWINGS

FIG. 1 is a schematic view illustrating an injection molding machine in a state when performing mold clamping according to a first embodiment of the present invention;
FIG. 2 is a schematic view illustrating an injection molding machine in a state when mold opening is completed according to a first embodiment of the present invention;
FIG. 3 is a schematic view illustrating a movement unit that moves an intermediate support frame in FIG. 1 with the intermediate support frame in a state when mold opening starts;
FIG. 4 is a schematic view illustrating the intermediate support frame in FIG. 3 in a state during mold opening;
FIG. 5 is a schematic view illustrating the intermediate support frame in FIG. 3 in a state when mold opening completes;
FIG. 6 is a schematic view illustrating an intermediate support frame in a state when mold opening starts according to a modified example of the first embodiment, which is not part of the present invention;
FIG. 7 is a schematic view illustrating an intermediate support frame in a state during mold opening according to the modified example of the first embodiment, which is not part of the present invention;
FIG. 8 is a schematic view illustrating an intermediate support frame in a state when mold opening completes according to the modified example of the first embodiment, which is not part of the present invention;
FIG. 9 is a schematic view illustrating an injection molding machine in a state when performing mold clamping according to a second embodiment of the present invention;
FIG. 10 is a schematic view illustrating an injection molding machine in a state when performing mold clamping according to a third embodiment of the present invention; and
FIG. 11 is a schematic view illustrating an injection molding machine in a state when performing mold clamping according to a fourth embodiment of the present invention.

### DETAILED DESCRIPTION

In the following, embodiments of the present invention will be described with reference to the drawings. The same or corresponding elements across the drawings are assigned the same or corresponding numerical codes, and their description may not be repeated.

### [First embodiment]

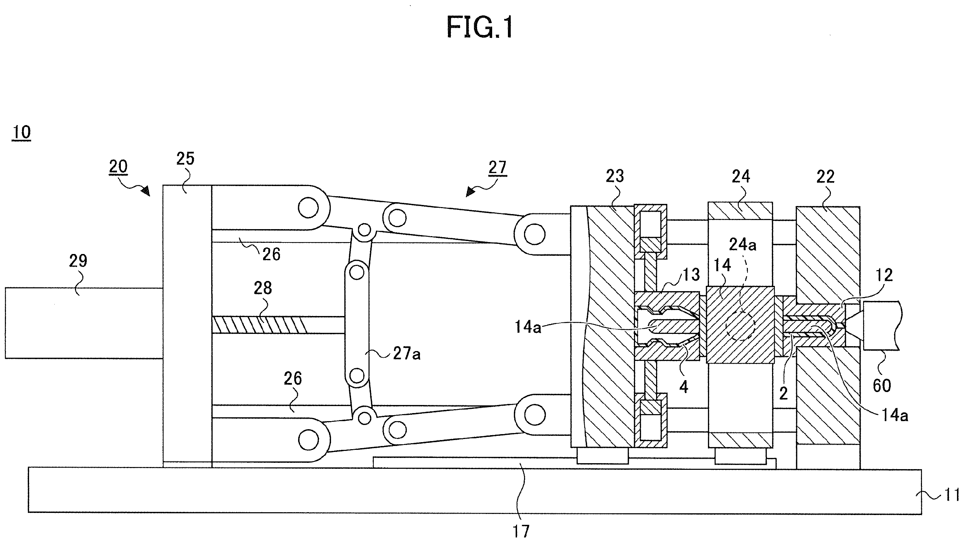

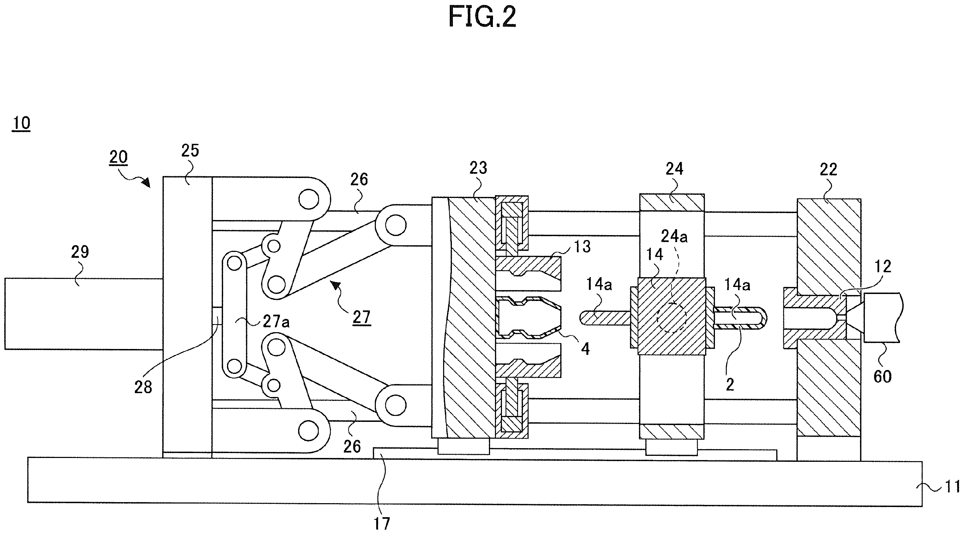

FIG. 1 is a schematic view illustrating an injection molding machine 10 in a state when performing mold clamping according to the first embodiment of the present invention. FIG. 2 is a schematic view illustrating the injection molding machine in a state when mold clamping is completed according to the first embodiment of the present invention.

The injection molding machine 10 is an injection blow molding machine. The injection molding machine 10 forms a preform 2 with injection molding by filling a cavity space formed between an injection mold 12 and a rotational mold 14 in a clamped mold state with a molding material, then expands the obtained preform 2 in a blow mold 13 to form a molding product 4 with blow molding.

Here, although one molding product 4 is illustrated in FIGs. 1-2, multiple molding products 4 may be formed at the same time. Also, stretch blow molding can be performed that blows air while stretching the preform 2 with a stretch piston rod.

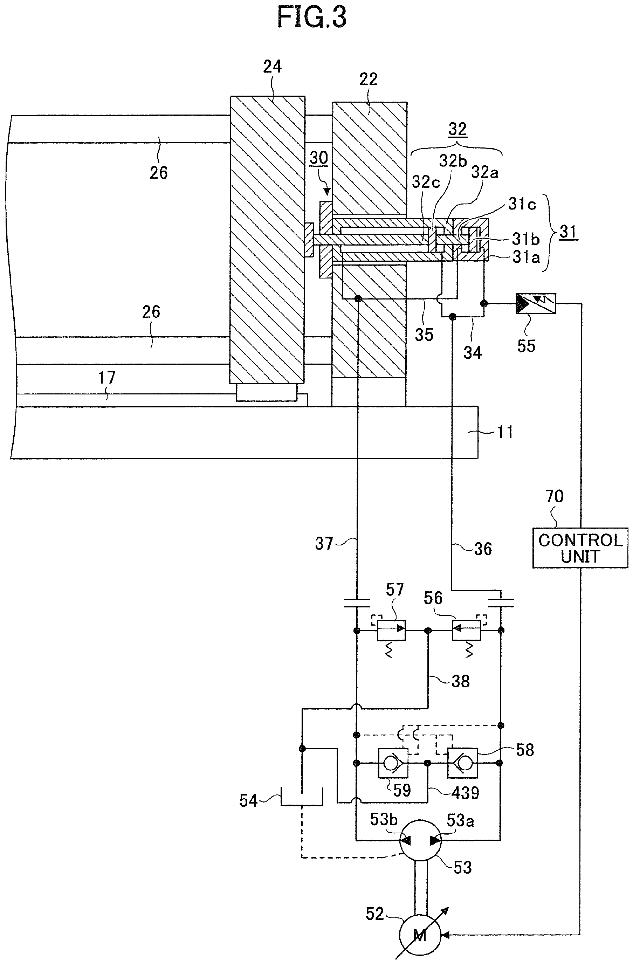

The injection molding machine 10 includes, for example, a mold clamping unit 20, an injection unit 60, a control unit 70, and the like (see FIG. 3). In the following, the moving direction of a movable platen 23 during a mold closing process is referred to as the front, and the moving direction of the movable platen 23 during a mold opening process is referred to as the rear.

The mold clamping unit 20 is configured with, for example, a stationary platen 22, the movable platen 23, an intermediate support frame 24, a rear platen 25, tie bars 26, a toggle mechanism 27, a mold clamping motor 29, a movement unit 30, and the like (see FIG. 3) .

The stationary platen 22 may be fixed on a frame 11. The mold attachment surface of the stationary platen 22 has the injection mold 12 attached as a stationary mold.

The movable platen 23 freely moves back and forth along a guide 17 laid on the frame 11. The mold attachment surface of the movable platen 23 has the blow mold 13 attached as a movable mold.

The intermediate support frame 24 is disposed between the stationary platen 22 and the movable platen 23, and freely moves back and forth along the guide 17 independently from the movable platen 23. The intermediate support frame 24 supports the rotational mold 14 as an intermediate mold so that the rotational mold 14 can rotate freely.

With a 180-degree rotation of the rotational mold 14 around a rotational axis 24a as the center, the positions of two convex parts 14a formed opposed on the rotational mold 14 are switched between a position facing a concave part formed on the injection mold 12 and a position facing a concave part formed on the blow mold 13.

The rear platen 25 is disposed in the rear of the movable platen 23, and connected with the stationary platen 22 via the multiple tie bars 26. To allow the tie bars 26 to be extended during mold clamping, the rear platen 25 is movably placed on the frame 11.

Here, although the stationary platen 22 is fixed on the frame 11 and the rear platen 25 is placed on the frame 11 according to the present embodiment, the stationary platen 22 may be placed on the frame 11 and, the rear platen 25 may be fixed on the frame 11.

The toggle mechanism 27 is disposed between the movable platen 23 and the rear platen 25. The toggle mechanism 27 is configured with, for example, a crosshead 27a movable back and forth relative to the frame 11, and multiple links that transfer a thrust input at the crosshead 27a to the movable platen 23.

The mold clamping motor 29 includes a ball screw mechanism as a motion conversion part that converts rotational motion into linear motion to operate the toggle mechanism 27 by moving a driving shaft 28 back and forth so that the crosshead 27a moves back and forth.

By driving the mold clamping motor 29 to move the crosshead 27a forward, the movable platen 23 is moved forward. At this moment, the movement unit 30 may move the intermediate support frame 24 forward. Mold closing completes when the blow mold 13 comes into contact with the rotational mold 14 and the rotational mold 14 comes into contact the injection mold 12. Next, by driving the mold clamping motor 29 further, a mold clamping force is generated that is obtained by multiplying a thrust of the mold clamping motor 29 by a toggle factor.

By driving the mold clamping motor 29 to move the crosshead 27a backward, the movable platen 23 is moved backward. At this moment, the movement unit 30 moves the intermediate support frame 24 backward. The blow mold 13 is separated from the rotational mold 14 and the rotational mold 14 is separated from the injection mold 12, which concludes mold opening.

Next, operation of the injection molding machine 10 with the above configuration will be described.

First, as illustrated in FIG. 1, the injection unit 60 forms the preform 2 with injection molding by filling the cavity space formed between the concave part of the injection mold 12 and one of the convex parts 14a of the rotational mold 14 in a clamped mold state with the molding material. The preform 2 is held in a state where the preform 2 is attached to one of the convex parts 14a of the rotational mold 14.

After that, as illustrated FIG. 2, mold opening is performed, and the rotational mold 14 rotates around the rotational axis 24a as the center by 180 degrees, which causes one of the convex parts 14a holding the preform 2 and the concave part of the blow mold 13 to face each other. Mold closing and mold clamping are performed in this state.

Next, as illustrated in FIG. 1, one of the convex parts 14a holding the preform 2 blows out compressed air whose air pressure expands the preform 2 in the blow mold 13, and a molding product 4 is formed with blow molding. At this moment, the cavity space formed between the convex part 14a at the other side and the concave part of the injection mold 12 is filled with the molding material, which forms another preform 2 with injection molding. Injection molding of the other preform 2 and blow molding of the molding product 4 are performed at the same time.

After that, as illustrated in FIG. 2, mold opening is performed, the blow mold 13 as a split mold is separated, and the molding product 4 is taken out.

Here, the injection mold 12 and the blow mold 13 may be placed conversely. Namely, the movable platen 23 may have the injection mold 12 attached and the blow mold 13 may be attached to the stationary platen 22.

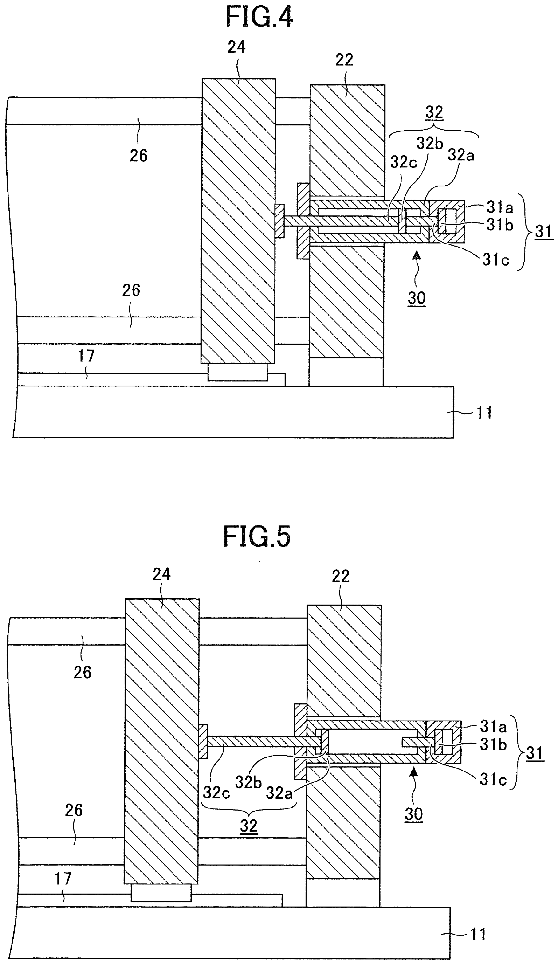

FIG. 3 is a schematic view illustrating the movement unit 30 that moves the intermediate support frame 24 in FIG. 1 with the intermediate support frame 24 in a state when mold opening starts. FIG. 4 is a schematic view illustrating the intermediate support frame 24 in FIG. 3 in a state during mold opening. FIG. 5 is a schematic view illustrating the intermediate support frame 24 in FIG. 3 in a state when mold opening completes.

The movement unit 30 includes, for example, a front cylinder 31 as a first hydraulic cylinder, a rear cylinder 32 as a second hydraulic cylinder, a motor 52, a hydraulic pump 53, a tank 54, a pressure sensor 55, a first relief valve 56, a second relief valve 57, a first check valve 58, and a second check valve 59. The front cylinder 31 and the rear cylinder 32 move the intermediate support frame 24 as a second member relative to the frame 11 as the first member.

The front cylinder 31 is a hydraulic cylinder, which is configured with a main body 31a of the front cylinder 31, a front piston 31b that divides a space in the main body 31a of the front cylinder 31 into a front chamber and a rear chamber, and a front piston rod 31c that moves back and forth with the front piston 31b.

The rear cylinder 32 is a hydraulic cylinder, which is configured with a main body 32a of the rear cylinder 32, a rear piston 32b that divides a space in the main body 32a of the rear cylinder 32 into a front chamber and a rear chamber, and a rear piston rod 32c that moves back and forth with the rear piston 32b.

The main body 31a of the front cylinder 31 is unified with the main body 32a of the rear cylinder 32 disposed in the rear, and the main body 32a of the rear cylinder 32 is attached to the stationary platen 22. The stroke of the front piston 31b is shorter than the stroke of the rear piston 32b. The front piston rod 31c is movably inserted into a through-hole formed through a partition wall that separates the rear chamber of the main body 31a of the front cylinder 31 and the front chamber of the main body 32a of the rear cylinder 32, and comes into contact with or moves away from the rear piston 32b. The tip of the rear piston rod 32c is fixed at the intermediate support frame 24.

The front chamber of the main body 31a of the front cylinder 31 is in communication with the front chamber of the main body 32a of the rear cylinder 32 via a first connection passage 34 to maintain the same hydraulic pressure. Also, the rear chamber of the main body 31a of the front cylinder 31 is in communication with the rear chamber of the main body 32a of the rear cylinder 32 via a second connection passage 35 to maintain the same hydraulic pressure.

The motor 52 may be an electric servomotor that drives the hydraulic pump 53 in a rotational direction with a rotational torque in response to a control signal from the control unit 70. The control unit 70 may control the motor 52 based on a detection result of the pressure sensor 55.

The hydraulic pump 53 includes a first port 53a and a second port 53b. The first port 53a is connected with the first connection passage 34 via a first passage 36, and the second port 53b is connected with the second connection passage 35 via a second passage 37. The hydraulic pump 53 generates hydraulic pressure that is supplied to both the front cylinder 31 and the rear cylinder 32.

The hydraulic pump 53 is a pump that can rotate in both directions, and by switching the rotational direction of the motor 52, suctions the operating fluid (for example, oil) from one of the first port 53a and the second port 53b, and discharges the operating fluid out of the other port to generate hydraulic pressure. Here, the hydraulic pump 53 may suction the operating fluid contained in the tank 54, and discharge the operating fluid out of one of the first port 53a and the second port 53b.

The pressure sensor 55 is a sensor for detecting pressure in the first connection passage 34, and outputs a detection result to the control unit 70. The pressure detected by the pressure sensor 55 represents a mold release force that takes a preform 2 off the injection mold 12 when mold opening starts.

The first relief valve 56 opens if pressure in the first connection passage 36 is over a setting value to return the operating fluid in excess in the first connection passage 36 back to the tank 54 to keep the pressure in the first connection passage 36 below the setting value.

The second relief valve 57 opens if pressure in the second connection passage 37 is over a setting value to return the operating fluid in excess in the second connection passage 37 back to the tank 54 to keep the pressure in the second connection passage 37 below the setting value.

Incidentally, the front piston rod 31c penetrates through the rear chamber of the main body 31a of the front cylinder 31. Therefore, the cross-sectional area of the rear chamber of the main body 31a of the front cylinder 31 is smaller than the cross-sectional area of the front chamber of the main body 31a of the front cylinder 31. This is the same in the main body 32a of the rear cylinder 32. To adjust excess and deficiency of an amount of operating fluid circulation caused by the difference between the cross-sectional areas, the first check valve 58 and the second check valve 59 are disposed between the first connection passage 36 and the second connection passage 37. Also, a connection path that connects the first check valve 58 with the second check valve 59 is connected with the tank 54 via a drain passage 38.

For example, if the front cylinder 31 expands the rear chamber and reduces the front chamber to move the intermediate support frame 24 forward, the operating fluid is discharged from the front chamber. The amount of the operating fluid discharged from the front chamber is greater than the amount of the operating fluid supplied to the rear chamber because the cross-sectional area of the front chamber is greater than the cross-sectional area of the rear chamber.

When the front cylinder 31 moves the intermediate support frame 24 forward, the hydraulic pump 53 suctions the operating fluid discharged from the front chamber of the front cylinder 31, and discharges it into the second passage 37, which increases an amount of the operating fluid supplied into the second passage 37, and raises hydraulic pressure in the second passage 37. Consequently, the hydraulic pressure in the second passage 37 operates on the first check valve 58 to open the first check valve 58. Therefore, the operating fluid discharged from the front chamber of the front cylinder 31 returns to the tank 54 via the first check valve 58 and the drain passage 38. Thus, excess and deficiency of the amount of operating fluid circulation can be adjusted.

Next, with reference to FIGs. 3-5, operation of the movement unit 30 with the above configuration will be described.

When mold opening starts as illustrated in FIG. 3, the hydraulic pump 53 supplies the operating fluid into the first connection passage 34, which raises the hydraulic pressure of the first connection passage 34. The high-pressure operating fluid applies backward pressure to the front piston 31b, and the front piston rod 31c applies backward pressure to the rear piston 32b. At the same time, the high-pressure operating fluid applies backward pressure to the rear piston 32b. By applying backward pressure to the rear piston 32b, the rear piston rod 32c applies backward pressure to the intermediate support frame 24, which generates a thrust to move the intermediate support frame 24 backward and generates a mold release force to take a preform 2 off the injection mold 12.

The force with which the high-pressure operating fluid applies backward pressure to the front piston 31b is transferred to the rear piston 32b via the front piston rod 31c that has a smaller diameter than the front piston 31b. Therefore, a part at the rear piston 32b in contact with the front piston rod 31c has pressure applied that is higher than the hydraulic pressure of the operating fluid. Therefore, a force that applies backward pressure to the rear piston 32b is stronger than in a case without the front cylinder 31, which makes the thrust to move the intermediate support frame 24 backward stronger, and a sufficient mold release force can be generated.

After the preform 2 is taken off from the injection mold 12, the hydraulic pump 53 continues to supply the operating fluid to the first connection passage 34, which expands the front chamber of the main body 31a of the front cylinder 31 and the front chamber of the main body 32a of the rear cylinder 32 that are in communication with each other via the first connection passage 34. Therefore, the front piston rod 31c and the rear piston rod 32c move backward, which makes the intermediate support frame 24 move backward. This reduces the rear chamber of the main body 31a of the front cylinder 31 and the rear chamber of the main body 32a of the rear cylinder 32, and excess operating fluid in the respective rear chambers is suctioned into the second port 53b of the hydraulic pump 53 via the second passage 37.

As illustrated in FIG. 4, after the front piston 31b reaches a backward limit position (stroke end), the hydraulic pump 53 continues to supply the operating fluid to the first connection passage 34, which does not expand the front chamber of the main body 31a of the front cylinder 31 any more, but still expands the front chamber of the main body 32a of the rear cylinder 32. In a state where the front piston rod 31c stops, the rear piston rod 32c moves backward, and the intermediate support frame 24 moves backward further.

At this moment, among the front cylinder 31 and the rear cylinder 32, only the rear cylinder 32 moves the intermediate support frame 24 backward. Provided that the operating fluid is supplied at a constant rate to the first connection passage 34 from the hydraulic pump 53, the front chamber of the main body 32a of the rear cylinder 32 expands at higher speed as the front chamber of the main body 31a of the front cylinder 31 does not expand, which makes the intermediate support frame 24 move backward at higher speed.

When mold opening completes as illustrated in FIG. 5, the hydraulic pump 53 stops, and the intermediate support frame 24 stops.

Thus, a pressure applying operation of the front cylinder 31 comes to stop while the rear cylinder 32 continues to perform the pressure applying operation according to the present embodiment. When mold opening starts, the front cylinder 31 and the rear cylinder 32 apply backward pressure to the intermediate support frame 24. Therefore, a thrust to move the intermediate support frame 24 backward is strong when mold opening starts, which can generate a mold release force sufficient to take the preform 2 off the injection mold 12. After that, among the front cylinder 31 and the rear cylinder 32, only the rear cylinder 32 continues to move the intermediate support frame 24 backward. As the operating fluid is not supplied to the front cylinder 31, but only supplied to the rear cylinder 32, the main body 32a of the rear cylinder 32 expands at higher speed, which makes the intermediate support frame 24 move backward at higher speed, and mold opening is completed in a short time.

Here, although the front piston rod 31c makes contact with the rear piston 32b when mold opening starts according to the present embodiment, it may be separated from the rear piston 32b. After mold opening starts, the rear piston 32b stops without obtaining a sufficient mold release force, the front piston rod 31c moves backward to come into contact with the rear piston 32b, and applies backward pressure to the rear piston 32b. Therefore, a sufficient mold release force is obtained.

Also, according to the present embodiment, when mold opening starts, the front cylinder 31 applies backward pressure to the intermediate support frame 24 via the rear cylinder 32. As the front cylinder 31 and the rear cylinder 32 are arranged in series, the diameter of a cylinder assembly configured with the front cylinder 31 and the rear cylinder 32 can be made smaller. The cylinder assembly may be disposed off the center line of the injection mold 12, and multiple cylinder assemblies may be disposed symmetrically around the center line of the injection mold 12 as the center. Here, a cylinder assembly may be configured with more than two hydraulic cylinders in series.

Also, according to the present embodiment, when mold opening starts, the front piston rod 31c applies backward pressure to the rear piston 32b, and the rear piston rod 32c applies backward pressure to the intermediate support frame 24. The length of the cylinder assembly is short because the main body 31a of the front cylinder 31 and the main body 32a of the rear cylinder 32 are unified. Also, load of the hydraulic pump 53 can be reduced because the front piston rod 31c with a weight less than that of the main body 31a of the front cylinder 31 and the rear piston rod 32c with a weight less than that of the main body 32a of the rear cylinder 32 are made movable.

Here, the main body 31a of the front cylinder 31 and the main body 32a of the rear cylinder 32 may be separated, and the front piston rod 31c may apply backward pressure to the main body 32a of the rear cylinder 32 instead of the rear piston 32b when mold opening starts.

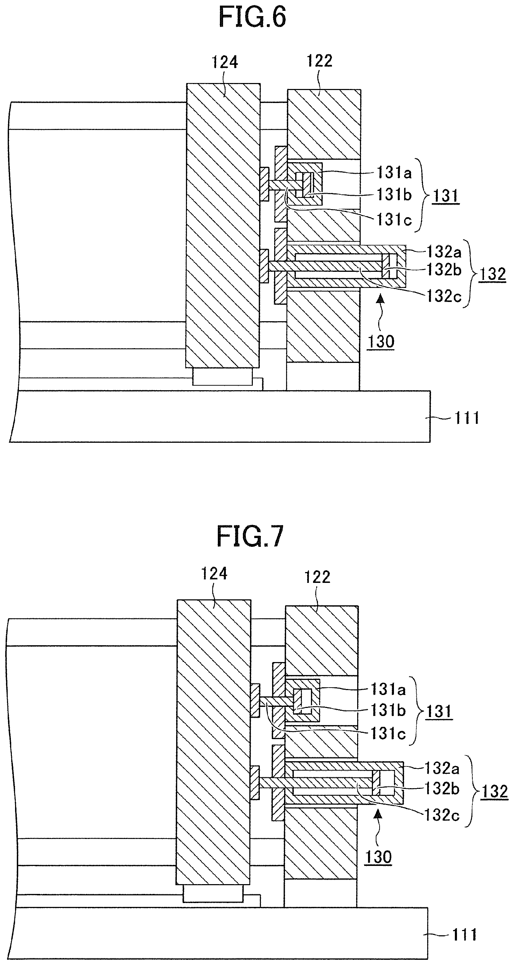

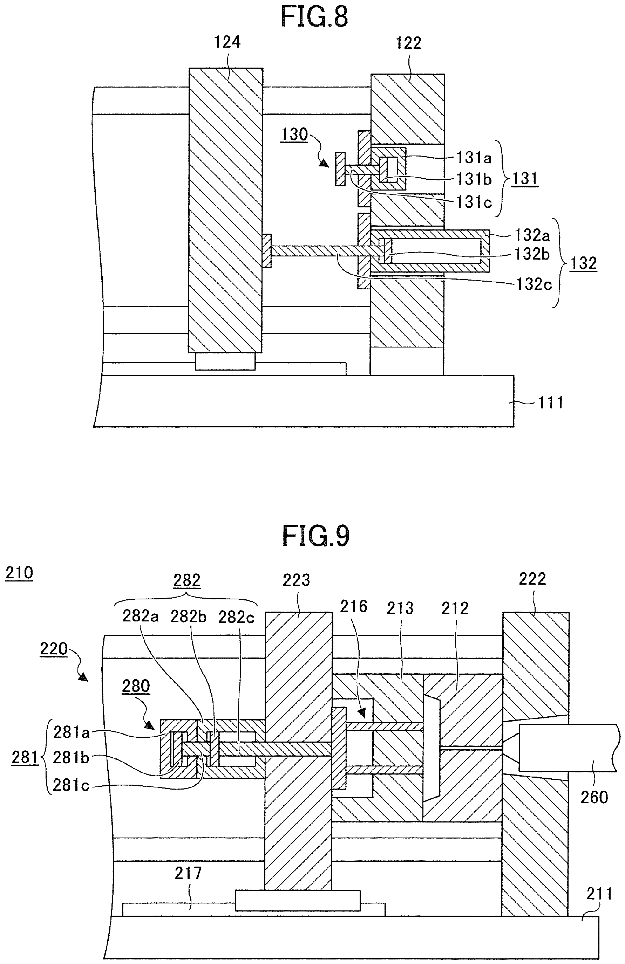

Next, with reference to FIGs. 6-8, a configuration of a movement unit 130 will be described according to a modified example of the first embodiment. FIG. 6 is a schematic view illustrating an intermediate support frame 124 in a state when mold opening starts according to the modified example of the first embodiment. FIG. 7 is a schematic view illustrating the intermediate support frame 124 in a state during mold opening according to the modified example of the first embodiment. FIG. 8 is a schematic view illustrating the intermediate support frame 124 in a state when mold opening completes according to the modified example of the first embodiment.

The movement unit 130 is a unit to move the intermediate support frame 124 relative to a frame 111, which includes an upper cylinder 131 as a first hydraulic cylinder, a lower cylinder 132 as a second hydraulic cylinder, and the like. The upper cylinder 131 and the lower cylinder 132 move the intermediate support frame 124 as a second member relative to the frame 111 as a first member.

The upper cylinder 131 is a hydraulic cylinder, which is configured with a main body 131a of the upper cylinder 131, an upper piston 131b that divides a space in the main body 131a of the upper cylinder 131 into a front chamber and a rear chamber, and an upper piston rod 131c moves back and forth with the upper piston 131b.

The lower cylinder 132 is a hydraulic cylinder, which is configured with a main body 132a of the lower cylinder 132, a lower piston 132b that divides a space in the main body 32a of the lower cylinder 132 into a front chamber and a rear chamber, and an upper piston rod 132c moves back and forth with the lower piston 132b.

The main body 131a of the upper cylinder 131 and the main body 132a of the lower cylinder 132 are separately attached to the stationary platen 122. The stroke of the upper piston 131b is shorter than the stroke of the lower piston 132b. The tip of the upper piston rod 131c comes into contact with or moves away from the intermediate support frame 124. The tip of the lower piston rod 132c is fixed at the intermediate support frame 124.

The front chamber of the main body 131a of the upper cylinder 131 is in communication with the front chamber of the main body 132a of the lower cylinder 132 via a first connection passage to maintain the same hydraulic pressure. Also, the rear chamber of the main body 131a of the upper cylinder 131 is in communication with the rear chamber of the main body 132a of the lower cylinder 132 via a second connection passage to maintain the same hydraulic pressure.

Next, with reference to FIGs. 6-8 again, operation of the movement unit 130 will be described according to the modified example.

When mold opening starts as illustrated in FIG. 6, a hydraulic pump supplies the operating fluid into the first connection passage, which raises hydraulic pressure of the first connection passage. The high-pressure operating fluid applies backward pressure to the upper piston 131b, and the upper piston rod 131c comes into contact with the intermediate support frame 124, which applies backward pressure to the intermediate support frame 124. At the same time, the high-pressure operating fluid applies backward pressure to the lower piston 132b, and the lower piston rod 132c that stably contacts the intermediate support frame 124 applies backward pressure to intermediate support frame 124. This generates a thrust to move the intermediate support frame 124 backward that generates a mold release force to take a preform off an injection mold.

The upper cylinder 131 and the lower cylinder 132 that contact the intermediate support frame 124 apply backward pressure to the intermediate support frame 124. Therefore, a thrust that moves the intermediate support frame 124 backward is stronger than in a case without the upper cylinder 131, which makes the thrust to move the intermediate support frame 124 backward stronger, and a sufficient mold release force can be generated.

After the preform is taken off from the injection mold, the hydraulic pump continues to supply the operating fluid to the first connection passage, which expands the front chamber of the main body 131a of the upper cylinder 131 and the front chamber of the main body 132a of the lower cylinder 132 that are in communication with each other via the first connection passage. Therefore, the upper piston rod 131c and the lower piston rod 132c move backward, which makes the intermediate support frame 124 move backward.

As illustrated in FIG. 7, after the upper piston 131b reaches a backward limit position (stroke end), the hydraulic pump continues to supply the operating fluid to the first connection passage, which does not expand the front chamber of the main body 131a of the upper cylinder 131 any more, but still expands the front chamber of the main body 132a of the lower cylinder 132. In a state where the upper piston rod 131c stops, the lower piston rod 132c moves backward, and the intermediate support frame 124 moves backward further.

At this moment, among the upper cylinder 131 and the lower cylinder 132, only the lower cylinder 132 moves the intermediate support frame 124 backward. Provided that the operating fluid is supplied at a constant rate to the first connection passage from the hydraulic pump, the front chamber of the main body 132a of the lower cylinder 132 expands at higher speed as the front chamber of the main body 31a of the upper cylinder 131 does not expand, which makes the intermediate support frame 124 move backward at higher speed.

According to the modified example, when mold opening completes as illustrated in FIG. 8, the hydraulic pump stops, and the intermediate support frame 124 stops.

Pressure applying operation of the upper cylinder 131 comes to stop while the lower cylinder 132 continues to perform pressure applying operation according to the modified example. When mold opening starts, the upper cylinder 131 and the lower cylinder 132 apply backward pressure to the intermediate support frame 124. Therefore, a thrust to move the intermediate support frame 124 backward is strong when mold opening starts, which can generate a mold release force sufficient to take a preform off the injection mold. After that, among the upper cylinder 131 and the lower cylinder 132, only the lower cylinder 132 moves the intermediate support frame 124 backward. As the operating fluid is not supplied to the upper cylinder 131, but only supplied to the lower cylinder 132, the main body 132a of the lower cylinder 132 expands at higher speed, which makes the intermediate support frame 124 move backward at higher speed, and mold opening is completed in a short time.

Also, the upper cylinder 131 and the lower cylinder 132 that contact the intermediate support frame 124, respectively, apply backward pressure to the intermediate support frame 124. As the upper cylinder 131 and the lower cylinder 132 are arranged in parallel, the total length of a cylinder assembly configured with the upper cylinder 131 and the lower cylinder 132 is short. The cylinder assembly may be disposed off the center line of the injection mold, and multiple cylinder assemblies may be disposed symmetrically around the center line of the injection mold as the center. Here, a cylinder assembly may be configured with more than two hydraulic cylinders in parallel.

Here, a movement unit of an intermediate support frame may include both multiple hydraulic cylinders in series and multiple hydraulic cylinders in parallel.

### [Second embodiment]

The front cylinder and the rear cylinder in the first embodiment constitute the movement unit that moves the intermediate support frame 24 relative to the frame 11. On the other hand, a front cylinder and a rear cylinder in the present embodiment constitute an ejector unit that ejects a molding product from a movable mold.

FIG. 9 is a schematic view illustrating an injection molding machine 210 in a state when performing mold clamping according to the second embodiment of the present invention. The injection molding machine 210 forms a molding product with injection molding by filling a cavity space formed between a stationary mold 212 and a movable mold 213 in a clamped mold state with a molding material. The injection molding machine 210 includes, for example, a mold clamping unit 220, an injection unit 260, an ejector unit 280, and the like.

The mold clamping unit 220 is configured with, for example, a stationary platen 222, a movable platen 223, and the like. The stationary platen 222 may be fixed on a frame 211. The mold attachment surface of the stationary platen 222 has the stationary mold 212 attached. The movable platen 223 freely moves back and forth along a guide 217 laid on the frame 211. The mold attachment surface of the movable platen 223 has the movable mold 213 attached as a movable mold. The mold clamping unit 220 performs mold closing, mold clamping, and mold opening by moving the movable platen 223 back and forth relative to the frame 211.

The injection unit 260 forms a molding product with injection molding by filling the cavity space formed between the stationary mold 212 and the movable mold 213 in a clamped mold state with the molding material.

After mold opening, the ejector unit 280 moves a molding product ejection member 216 forward relative to the movable platen 223 to eject the molding product from the movable mold 213. After ejection of the molding product, the ejector unit 280 moves the molding product ejection member 216 back to an ejection start position. The ejector unit 280 includes, for example, a rear cylinder 281 as a first hydraulic cylinder and a front cylinder 282 as a second hydraulic cylinder. The rear cylinder 281 and the front cylinder 282 move the molding product ejection member 216 as a second member relative to the movable platen 223 as a first member.

The rear cylinder 281 is a hydraulic cylinder, which is configured with a main body 281a of the rear cylinder 281, a rear piston 281b that divides a space in the main body 281a of the rear cylinder 281 into a front chamber and a rear chamber, and a rear piston rod 281c that moves back and forth with the rear piston 281b.

The front cylinder 282 is a hydraulic cylinder, which is configured with a main body 282a of the front cylinder 282, a front piston 282b that divides a space in the main body 282a of the front cylinder 282 into a front chamber and a rear chamber, and a front piston rod 282c that moves back and forth with the front piston 282b.

The main body 281a of the rear cylinder 281 is unified with the main body 282a of the front cylinder 282 disposed in the front, and the main body 282a of the front cylinder 282 is attached to the stationary platen 223. The stroke of the rear piston 281b is shorter than the stroke of the front piston 282b. The rear piston rod 281c is movably inserted into a through-hole formed through a partition wall that separates the front chamber of the main body 281a of the rear cylinder 281 and the rear chamber of the main body 282a of the front cylinder 282, and comes into contact with or moves away from the front piston 282b. The tip of the front piston rod 282c makes contact with the molding product ejection member 216.

The rear chamber of the main body 281a of the rear cylinder 281 is in communication with the rear chamber of the main body 282a of the front cylinder 282 via a first connection passage to maintain the same hydraulic pressure. Also, the front chamber of the main body 281a of the rear cylinder 281 is in communication with the front chamber of the main body 282a of the front cylinder 282 via a second connection passage to maintain the same hydraulic pressure.

According to the present embodiment, a pressure applying operation of the rear cylinder 281 comes to stop while the front cylinder 282 continues to perform the pressure applying operation. When mold opening starts, the rear cylinder 281 and the front cylinder 282 apply forward pressure to the molding product ejection member 216. Therefore, a thrust to move the molding product ejection member 216 forward is strong when ejection starts, which can generate a mold release force sufficient to take a molding product off the stationary platen 213. After that, among the rear cylinder 281 and the front cylinder 282, only the front cylinder 282 moves the molding product ejection member 216 forward. As the operating fluid is not supplied to the rear cylinder 281 but only supplied to the front cylinder 282, the front piston rod 282c moves forward at higher speed, which makes the molding product ejection member 216 move forward at higher speed, and ejection of a molding product is completed in a short time.

Here, although the rear piston rod 281c makes contact with the front piston 282b when ejection starts according to the present embodiment, it may be separated from the front piston 282b. After ejection starts, the front piston 282b stops without obtaining a sufficient mold release force, the rear piston rod 281c moves forward to come into contact with the front piston 282b, and applies forward pressure to the front piston 282b. Therefore, a sufficient mold release force is obtained.

Also, according to the present embodiment, when ejection starts, the rear cylinder 281 applies forward pressure to the molding product ejection member 216 via the front cylinder 282. As the rear cylinder 281 and the front cylinder 282 are arranged in series, the diameter of a cylinder assembly configured with the rear cylinder 281 and the front cylinder 282 can be made smaller.

Also, according to the present embodiment, when mold opening starts, the rear piston rod 281c applies forward pressure to the front piston 282b, and the rear piston rod 32c applies forward pressure to the molding product ejection member 216. The length of the cylinder assembly is short because the main body 281a of the rear cylinder 281 and the main body 282a of the front cylinder 282 are unified. Also, the load of a hydraulic pump can be reduced because the rear piston rod 281c with a weight less than that of the main body 281a of the rear cylinder 281 and the rear piston rod 32c with a weight less than that of the main body 282a of the front cylinder 282 are made movable.

Here, the main body 281a of the rear cylinder 281 and the main body 282a of the front cylinder 282 may be separated, and the rear piston rod 281c may apply forward pressure to the main body 282a of the front cylinder 282 instead of the front piston 282b when mold opening starts.

Here, although the ejector unit 280 in the present embodiment includes the multiple hydraulic cylinders (the rear cylinder 281 and the front cylinder 282) in series, it may include multiple hydraulic cylinders in parallel as in the modified example of the first embodiment. Also, the ejector unit 280 may include both multiple hydraulic cylinders in series and multiple hydraulic cylinders in parallel.

### [Third embodiment]

The front cylinder and the rear cylinder in the first embodiment constitutes the movement unit that moves the intermediate mold 24 relative to the frame 11. On the other hand, a front cylinder and a rear cylinder in the present embodiment constitutes a movement unit that moves an intermediate mold relative to a stationary mold.

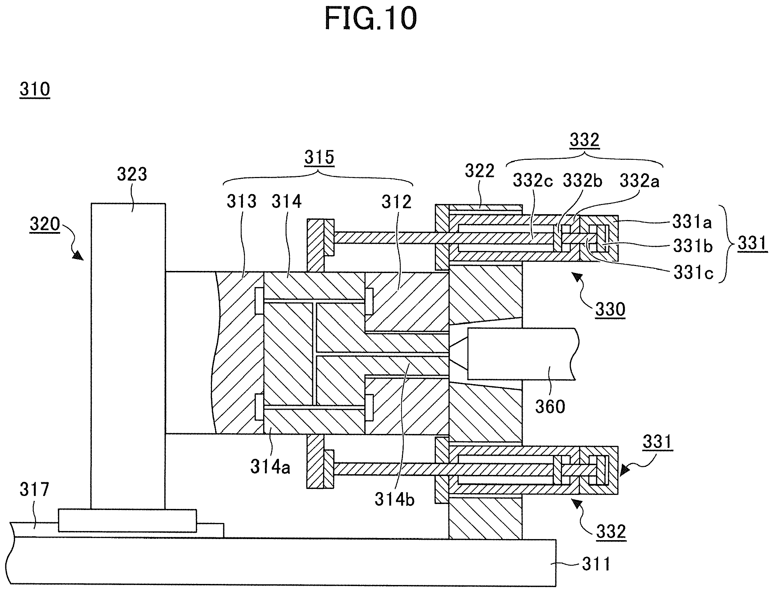

FIG. 10 is a schematic view illustrating an injection molding machine 310 in a state when performing mold clamping according to the third embodiment of the present invention. The injection molding machine 310 forms a molding product with injection molding by filling cavity spaces formed in a mold unit 315 in a clamped mold state with a molding material. The injection molding machine 310 includes, for example, a mold clamping unit 320, an injection unit 360, and the like.

The mold unit 315 is a stack mold unit configured with, for example, a stationary mold 312, a movable mold 313, and an intermediate mold 314. The intermediate mold 314 freely moves back and forth relative to the stationary mold 312. The intermediate mold 314 includes a main body 314a of the intermediate mold 314 disposed between the stationary mold 312 and the movable mold 313 and a snorkel part 314b projected forward from the main body 314a of the intermediate mold 314. Here, the snorkel part 314b may be projected sideways from the main body 314a of the intermediate mold 314.

The mold clamping unit 320 is configured with, for example, a stationary platen 322, a movement unit 330, and the like. The stationary platen 322 may be fixed on a frame 311. The mold attachment surface of the stationary platen 322 has the stationary mold 312 attached. A movable platen 323 freely moves back and forth along a guide 317 laid on the frame 311. The mold attachment surface of the movable platen 323 has the movable mold 313 attached. The mold clamping unit 320 performs mold closing, mold clamping, and mold opening by having the movable platen 323 move relative to the frame 311.

The mold clamping unit 320 performs mold closing, mold clamping, and mold opening by moving the movable platen 323 back and forth relative to the frame 311. With this movement, the movement unit 330 moves the intermediate mold 314 back and forth relative to the stationary mold 312.

In a mold closing process, the mold clamping unit 320 moves the movable platen 323 forward relative to the frame 311 to move the movable mold 313 forward. At this moment, the movement unit 330 moves the intermediate mold 314 forward. The movable mold 313 comes into contact with the main body 314a of the intermediate mold 314, and the main body 314a of the intermediate mold 314 comes into contact with the stationary mold 312, which complete mold closing.

In a mold clamping process, the mold clamping unit 320 applies forward pressure to the movable platen 323 relative to the frame 311 to generate a mold clamping force. In a clamped mold state, a molding material injected from the injection unit 360 goes through a sprue formed in the snorkel part 314b, and fills the cavity spaces formed in the mold unit 315. The cavity spaces are formed between the main body 314a of the intermediate mold 314 and the stationary mold 312, and between the main body 314a of the intermediate mold 314 and the movable mold 313, respectively.

In mold opening process, the mold clamping unit 320 moves the movable platen 323 backward relative to the frame 311 to move the movable mold 313 backward. At this moment, the movement unit 330 moves the intermediate mold 314 backward. The movable mold 313 is separated from the main body 314a of the intermediate mold 314, and the main body 314a of the intermediate mold 314 is separated from the stationary mold 312, which complete mold opening.

Next, the configuration of the movement unit 330 will be described. The movement unit 330 is a unit to move the intermediate mold 314 relative to the stationary mold 312, which includes front cylinders 331 as first hydraulic cylinders, rear cylinders 332 as second hydraulic cylinders, and the like. The front cylinders 331 and the rear cylinders 332 move the intermediate mold 314 as a second member relative to the stationary mold 312 as a first member.

Each of the front cylinders 331 is a hydraulic cylinder, which is configured with a main body 331a of the front cylinder 331, a front piston 331b that divides a space in the main body 331a of the front cylinder 331 into a front chamber and a rear chamber, and a front piston rod 331c that moves back and forth with the front piston 331b.

Each of the rear cylinders 332 is a hydraulic cylinder, which is configured with a main body 332a of the rear cylinder 332, a rear piston 332b that divides a space in the main body 332a of the rear cylinder 332 into a front chamber and a rear chamber, and a rear piston rod 332c that moves back and forth with the rear piston 332b.

The main body 331a of the front cylinder 331 is unified with the main body 332a of the rear cylinder 332 disposed in the rear, and the main body 332a of the rear cylinder 332 is attached to the stationary platen 322. The stroke of the front piston 331b is shorter than the stroke of the rear piston 332b. The front piston rod 331c is movably inserted into a through-hole formed through a partition wall that separates the rear chamber of the main body 331a of the front cylinder 331 and the front chamber of the main body 332a of the rear cylinder 332, and comes into contact with or moves away from the rear piston 332b. The tip of the rear piston rod 332c is fixed at the intermediate mold 314.

The front chamber of the main body 331a of the front cylinder 331 is in communication with the front chamber of the main body 332a of the rear cylinder 332 via a first connection passage to maintain the same hydraulic pressure. Also, the rear chamber of the main body 331a of the front cylinder 331 is in communication with the rear chamber of the main body 332a of the rear cylinder 332 via a second connection passage to maintain the same hydraulic pressure.

A pressure applying operation of the front cylinder 331 comes to stop while the rear cylinder 332 continues to perform the pressure applying operation according to the present embodiment. When mold opening starts, the front cylinder 331 and the rear cylinder 332 apply backward pressure to the intermediate mold 314. Therefore, a thrust to move the intermediate mold 314 backward is strong when mold opening starts, which can generate a mold release force sufficient to take off a molding product. After that, among the front cylinder 331 and the rear cylinder 332, only the rear cylinder 332 moves the intermediate mold 314 backward. As the operating fluid is not supplied to the front cylinder 331, but only supplied to the rear cylinder 332, the main body 332a of the rear cylinder 332 expands at higher speed, which makes the intermediate mold 314 move backward at higher speed, and mold opening is completed in a short time.

Here, although the front piston rod 331c makes contact with the rear piston 332b when mold opening starts according to the present embodiment, it may be separated from the rear piston 332b. After mold opening starts, the rear piston 332b stops without obtaining a sufficient mold release force, the front piston rod 331c moves forward to come into contact with the rear piston 332b, and applies backward pressure to the rear piston 332b. Therefore, a sufficient mold release force is obtained.

Also, according to the present embodiment, when mold opening starts, the front cylinder 331 applies backward pressure to the intermediate mold 314 via the rear cylinder 332. As the front cylinder 331 and the rear cylinder 332 are arranged in series, the diameter of a cylinder assembly configured with the front cylinder 331 and the rear cylinder 332 can be made smaller. The cylinder assembly may be disposed off the center line of the stationary mold 312, and multiple cylinder assemblies may be disposed symmetrically around the center line of the stationary mold 312 as the center. Here, a cylinder assembly may be configured with more than two hydraulic cylinders in series.

Also, according to the present embodiment, when mold opening starts, the front piston rod 331c applies backward pressure to the rear piston 332b, and the rear piston rod 332c applies backward pressure to the intermediate mold 314. The length of the cylinder assembly is short because the main body 331a of the front cylinder 331 and the main body 332a of the rear cylinder 332 are unified. Also, the load of a hydraulic pump can be reduced because the front piston rod 331c with a weight less than that of the main body 331a of the front cylinder 331 and the rear piston rod 332c with a weight less than that of the main body 332a of the rear cylinder 332 are made movable.

Here, the main body 331a of the front cylinder 331 and the main body 332a of the rear cylinder 332 may be separated, and the front piston rod 331c may apply backward pressure to the main body 332a of the rear cylinder 332 instead of the rear piston 332b when mold opening starts.

Here, although the movement unit 330 in the present embodiment includes the multiple hydraulic cylinders (the rear cylinder 381 and the front cylinder 382) in series, it may include multiple hydraulic cylinders in parallel as in the modified example of the first embodiment. Also, the movement unit 330 may include both multiple hydraulic cylinders in series and multiple hydraulic cylinders in parallel.

Also, although the movement unit 330 in the present embodiment is included in the mold clamping unit 320, it may be included in the mold unit 315. In this case, the main body 331a of the front cylinder and the main body 332a of the rear cylinder may be attached to the stationary mold 312.

### [Fourth embodiment]

The front cylinder and the rear cylinder in the first embodiment constitute the movement unit that moves the intermediate support frame 24 relative to the frame 11. On the other hand, a front cylinder and a rear cylinder in the present embodiment constitute a movement unit that moves an intermediate mold relative to a stationary mold.

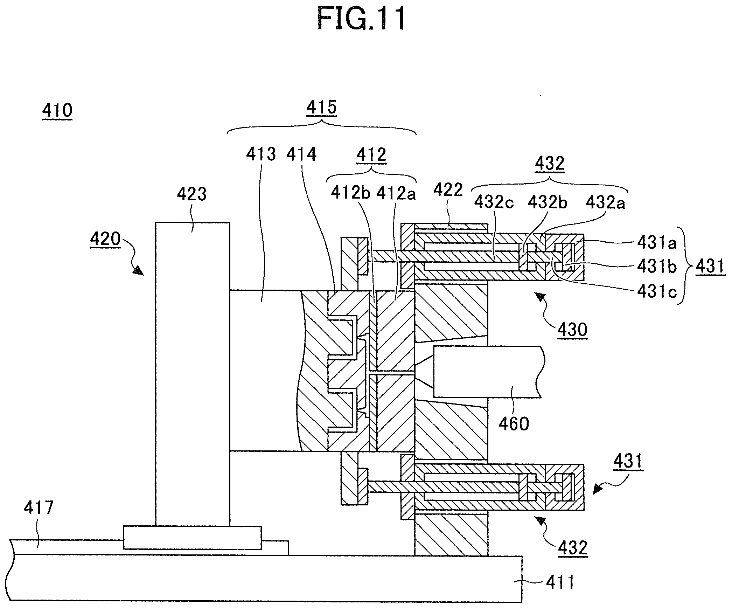

FIG. 11 is a schematic view illustrating an injection molding machine 410 in a state when performing mold clamping according to the fourth embodiment of the present invention. The injection molding machine 410 forms a molding product with injection molding by filling a cavity space formed in a mold unit 415 in a clamped mold state with a molding material. The injection molding machine 410 includes, for example, a mold clamping unit 420, an injection unit 460, and the like.

The mold unit 415 is a three-piece mold unit which is configured with, for example, a stationary mold 412, a movable mold 413, and an intermediate mold 414. The stationary mold 412 is configured with a stationary-side adapter plate 412a, a runner stripper plate 412b, and the like attached to a stationary platen 422. The intermediate mold 414 freely moves back and forth relative to the stationary mold 412. The intermediate mold 414 is disposed between the stationary mold 412 and the movable mold 413, and forms a cavity space with the movable mold 413.

The mold clamping unit 420 is configured with, for example, the stationary platen 422, a movement unit 430, and the like. The stationary platen 422 may be fixed on a frame 411. The mold attachment surface of the stationary platen 422 has the stationary mold 412 attached. A movable platen 423 freely moves back and forth along a guide 417 laid on the frame 411. The mold attachment surface of the movable platen 423 has the movable mold 413 attached. The mold clamping unit 420 performs mold closing, mold clamping, and mold opening by having the movable platen 423 move relative to the frame 411.

The mold clamping unit 420 performs mold closing, mold clamping, and mold opening by moving the movable platen 423 back and forth relative to the frame 411. With this movement, the movement unit 430 moves the intermediate mold 414 back and forth relative to the stationary mold 412.

In a mold closing process, the mold clamping unit 420 moves the movable platen 423 forward relative to the frame 411 to move the movable mold 413 forward. At this moment, the movement unit 430 moves the intermediate mold 414 forward. The movable mold 413 comes into contact with the intermediate mold 414, and the intermediate mold 414 comes into contact with the stationary mold 412, which complete mold closing.

In a mold clamping process, the mold clamping unit 420 applies forward pressure to the movable platen 423 relative to the frame 411 to generate a mold clamping force. In a clamped mold state, the molding material injected from the injection unit 460 goes through a sprue, a runner formed between the stationary mold 412 and the intermediate mold 414, and the like, to fill the cavity space formed between the intermediate mold 414 and the movable mold 413.

In a mold opening process, the mold clamping unit 420 moves the movable platen 423 backward relative to the frame 411 to move the movable mold 413 backward. At this moment, the movement unit 430 moves the intermediate mold 414 backward. The movable mold 413 is separated from the intermediate mold 414, and the intermediate mold 414 is separated from the stationary mold 412, which complete mold opening. Mold opening separates a molding product from the sprue and runner.

Next, the configuration of the movement unit 430 will be described. The movement unit 430 is a unit to move the intermediate mold 414 relative to the stationary mold 412, which includes front cylinders 431 as first hydraulic cylinders, rear cylinders 432 as second hydraulic cylinders, and the like. The front cylinders 431 and the rear cylinders 432 move the intermediate mold 414 as a second member relative to the stationary mold 412 as a first member.

Each of the front cylinders 431 is a hydraulic cylinder, which is configured with a main body 431a of the front cylinder 431, a front piston 431b that divides a space in the main body 431a of the front cylinder 431 into a front chamber and a rear chamber, and a front piston rod 431c that moves back and forth with the front piston 431b.

Each of the rear cylinders 432 is a hydraulic cylinder, which is configured with a main body 432a of the rear cylinder 432, a rear piston 432b that divides a space in the main body 432a of the rear cylinder 432 into a front chamber and a rear chamber, and a rear piston rod 432c that moves back and forth with the rear piston 432b.

The main body 431a of the front cylinder 431 is unified with the main body 432a of the rear cylinder 432 disposed in the rear, and the main body 432a of the rear cylinder 432 is attached to the stationary platen 422. The stroke of the front piston 431b is shorter than the stroke of the rear piston 432b. The front piston rod 431c is movably inserted into a through-hole formed through a partition wall that separates the rear chamber of the main body 431a of the front cylinder 431 and the front chamber of the main body 432a of the rear cylinder 432, and comes into contact with or moves away from the rear piston 432b. The tip of the rear piston rod 432c is fixed at the intermediate mold 414.

The front chamber of the main body 431a of the front cylinder 431 is in communication with the front chamber of the main body 432a of the rear cylinder 432 via a first connection passage to maintain the same hydraulic pressure. Also, the rear chamber of the main body 431a of the front cylinder 431 is in communication with the rear chamber of the main body 432a of the rear cylinder 432 via a second connection passage to maintain the same hydraulic pressure.

A pressure applying operation of the front cylinder 431 comes to stop while the rear cylinder 432 continues to perform the pressure applying operation according to the present embodiment. When mold opening starts, the front cylinder 431 and the rear cylinder 432 apply backward pressure to the intermediate mold 414. Therefore, a thrust to move the intermediate mold 414 backward is strong when mold opening starts, which can generate a mold release force sufficient to take off a molding material that is solidified along the sprue, the runner, and the like. After that, among the front cylinder 431 and the rear cylinder 432, only the rear cylinder 432 moves the intermediate mold 414 backward. As the operating fluid is not supplied to the front cylinder 431, but only supplied to the rear cylinder 432, the rear piston rod 432c moves backward at higher speed, which makes the intermediate mold 414 move backward at higher speed, and mold opening is completed in a short time.

Here, although the front piston rod 431c makes contact with the rear piston 432b when mold opening starts according to the present embodiment, it may be separated from the rear piston 432b. After mold opening starts, the rear piston 432b stops without obtaining a sufficient mold release force, the front piston rod 431c moves forward to come into contact with the rear piston 432b, and applies backward pressure to the rear piston 432b. Therefore, a sufficient mold release force is obtained.

Also, according to the present embodiment, when mold opening starts, the front cylinder 431 applies backward pressure to the intermediate mold 414 via the rear cylinder 432. As the front cylinder 431 and the rear cylinder 432 are arranged in series, the diameter of a cylinder assembly configured with the front cylinder 431 and the rear cylinder 432 can be made smaller. The cylinder assembly may be disposed off the center line of the stationary mold 412, and multiple cylinder assemblies may be disposed symmetrically around the center line of the stationary mold 412 as the center. Here, a cylinder assembly may be configured with more than two hydraulic cylinders in series.

Also, according to the present embodiment, when mold opening starts, the front piston rod 431c applies backward pressure to the rear piston 432b, and the rear piston rod 432c applies backward pressure to the intermediate mold 414. The length of the cylinder assembly is short because the main body 431a of the front cylinder 431 and the main body 432a of the rear cylinder 432 are unified. Also, the load of a hydraulic pump can be reduced because the front piston rod 431c with a weight less than that of the main body 431a of the front cylinder 431 and the rear piston rod 432c with a weight less than that of the main body 432a of the rear cylinder 432 are made movable.

Here, the main body 431a of the front cylinder 431 and the main body 432a of the rear cylinder 432 may be separated, and the front piston rod 431c may apply backward pressure to the main body 432a of the rear cylinder 432 instead of the rear piston 432b when mold opening starts.

Here, although the movement unit 430 in the present embodiment includes the multiple hydraulic cylinders (the rear cylinder 431 and the front cylinder 432) in series, it may include multiple hydraulic cylinders in parallel as in the modified example of the first embodiment. Also, the movement unit 430 may include both multiple hydraulic cylinders in series and multiple hydraulic cylinders in parallel.

Also, although the movement unit 430 in the present embodiment is included in the mold clamping unit 420, it may be included in the mold unit 415. In this case, the main body 431a of the front cylinder and the main body 432a of the rear cylinder may be attached to the stationary mold 412.

As above, the embodiments of the injection molding machine have been described. Further, the present invention is not limited to these embodiments, but various variations and modifications may be made without departing from the scope of the present invention as defined in the appended claims.

For example, although a hydraulic pump in the above embodiments supplies a high-pressure operating fluid to multiple hydraulic cylinders, multiple hydraulic pumps may be provided that correspond to respective hydraulic cylinders.

Also, although each of the injection molding machines in the above embodiments is a horizontal type in which molds are opened/closed horizontally, the injection molding machine may be a vertical type in which molds are opened/closed vertically.

Also in the above embodiments, a mold clamping unit generates a mold clamping force by using a toggle mechanism. Instead of using the toggle mechanism, propelling force generated by a mold clamping motor may be directly transferred to a movable platen. Alternatively, propelling force generated by a fluid pressure cylinder may be directly transferred to the movable platen. Also, a linear motor may open/close the mold clamping unit, or an electromagnet may clamp the mold clamping unit.

## Claims

1. An injection molding machine (10) comprising:
a first hydraulic cylinder (31) and a second hydraulic cylinder (32) configured to move a second member (24, 216, 314, 414) relative to a first member (11),
wherein the first hydraulic cylinder (31) applies pressure to the second member (24) in a predetermined direction via the second hydraulic cylinder (32), the first hydraulic cylinder (31) and the second hydraulic cylinder (32) are configured to apply pressure to the second member (24) in the predetermined direction, **characterized in that**
the first hydraulic cylinder (31) is configured to stop performing a pressure applying operation while the second hydraulic cylinder (32) continues to perform the pressure applying operation so that among the first hydraulic cylinder (31) and the second hydraulic cylinder (32), only the second hydraulic cylinder (32) applies pressure to the second member (24) in the predetermined direction.

2. The injection molding machine (10) as claimed in claim 1, wherein a piston rod (31c) of the first hydraulic cylinder (31) applies pressure to a piston rod (32c) of the second hydraulic cylinder (32) in the predetermined direction, and a piston rod (32c) of the second hydraulic cylinder (32) applies pressure to the second member (24) in the predetermined direction.

3. The injection molding machine (10) as claimed in claim 1 or 2, further comprising:
a hydraulic pump (53) configured to supply hydraulic pressure to both the first hydraulic cylinder (31) and the second hydraulic cylinder (32).

## Patentansprüche

1. Spritzgussmaschine (10), umfassend:
einen ersten hydraulischen Zylinder (31) und einen zweiten hydraulischen Zylinder (32), der konfiguriert ist, ein zweites Element (24, 216, 314, 414) relativ zu einem ersten Element (11) zu bewegen,
wobei der erste hydraulische Zylinder (31) Druck auf das zweite Element (24) in einer vorbestimmten Richtung über den zweiten hydraulischen Zylinder (32) ausübt, wobei der erste hydraulische Zylinder (31) und zweite hydraulische Zylinder (32) konfiguriert sind, Druck auf das zweite Element (24) in der vorbestimmten Richtung auszuüben, **dadurch gekennzeichnet, dass**
der erste hydraulische Zylinder (31) konfiguriert ist, Durchführen eines Druckausübungsbetriebs zu stoppen, während der zweite hydraulische Zylinder (32) mit Durchführen des Druckausübungsbetriebs fortfährt, sodass von dem ersten hydraulischen Zylinder (31) und dem zweiten hydraulischen Zylinder (32) nur der zweite hydraulische Zylinder (32) Druck auf das zweite Element (24) in der vorbestimmten Richtung ausübt.

2. Spritzgussmaschine (10) nach Anspruch 1, wobei eine Kolbenstange (31c) des ersten hydraulischen Zylinders (31) Druck auf eine Kolbenstange (32c) des zweiten hydraulischen Zylinders (32) in der vorbestimmten Richtung ausübt und eine Kolbenstange (32c) des zweiten hydraulischen Zylinders (32) Druck auf das zweite Element (24) in der vorbestimmten Richtung ausübt.

3. Spritzgussmaschine (10) nach Anspruch 1 oder 2, weiter umfassend:
eine hydraulische Pumpe (53), die konfiguriert ist, sowohl dem ersten hydraulischen Zylinder (31) als auch dem zweiten hydraulischen Zylinder (32) hydraulischen Druck zuzuleiten.

## Revendications

1. Machine de moulage par injection (10) comprenant :
un premier vérin hydraulique (31) et un second vérin hydraulique (32) configurés pour déplacer un second organe (24, 216, 314, 414) par rapport à un premier organe (11),
dans laquelle le premier vérin hydraulique (31) applique une pression au second organe (24) dans un sens prédéterminé par l'intermédiaire du second vérin hydraulique (32), le premier vérin hydraulique (31) et le second vérin hydraulique (32) étant configurés pour appliquer une pression au second organe (24) dans le sens prédéterminé,
**caractérisée en ce que**
le premier vérin hydraulique (31) est configuré pour cesser de réaliser une opération d'application de pression pendant que le second vérin hydraulique (32) continue de réaliser l'opération d'application de pression de sorte que parmi le premier vérin hydraulique (31) et le second vérin hydraulique (32), uniquement le second vérin hydraulique (32) applique une pression au second organe (24) dans le sens prédéterminé.

2. Machine de moulage par injection (10) selon la revendication 1, dans laquelle une tige de piston (31c) du premier vérin hydraulique (31) applique une pression à une tige de piston (32c) du second vérin hydraulique (32) dans le sens prédéterminé, et une tige de piston (32c) du second vérin hydraulique (32) applique une pression au second organe (24) dans le sens prédéterminé.

3. Machine de moulage par injection (10) selon la revendication 1 ou 2, comprenant en outre :
une pompe hydraulique (53) configurée pour fournir une pression hydraulique à la fois au premier vérin hydraulique (31) et au second vérin hydraulique (32).
